# EUROPÄISCHE PATENTANMELDUNG

(11) **EP 3 875 208 A1**
(43) Veröffentlichungstag der Anmeldung: **08.09.2021**
(21) Anmeldenummer: 21152443.4
(22) Anmeldetag: 20.01.2021
(51) Int. Cl.: B23K 26/00, B23K 26/06, B23K 26/352, B23K 26/364, B23K 26/382, B23K 26/402, B23K 26/70, C03B 27/012, C03B 33/09, B23K 103/00

(54) **VERFAHREN UND VORRICHTUNGEN ZUM BEARBEITEN EINES SPRÖDHARTEN WERKSTOFFES, INSBESONDERE VON GLÄSERN MITTELS LASERQUELLEN, DIE IR-STRAHLUNG IM WELLENLÄNGENBEREICH VON 2 µM BIS 5 µM EMITTIEREN**

(30) Priorität: 05.03.2020 DE 102020105898
(71) Anmelder: Schott AG, 55122 Mainz (DE)
(72) Erfinder: Haselhorst, Georg, 88662 Überlingen (DE); Wagner, Fabian, 55118 Mainz (DE)
(74) Vertreter: Sawodny, Michael-Wolfgang

(57) **Zusammenfassung**

Die Erfindung betrifft ein Verfahren und Vorrichtungen zum Bearbeiten von sprödharten Werkstoffen (1) mittels eines Laserstrahls (5) einer Laserquelle (3), wobei die Laserquelle (3) im Wellenlängenbereich von 2 µm bis 5 µm elektromagnetische Strahlung emittiert, die wenigstens teilweise von dem sprödharten Werkstoff (1) absorbiert wird und der sprödharte Werkstoff (1) einem der nachfolgenden Prozesse unterworfen wird: Einbringen von Bohrung/Ausschnitten in den sprödharten Werkstoff (1), Trennen des sprödharten Werkstoffes (1), Tempern des sprödharten Werkstoffes (1), Umformen des sprödharten Werkstoffes. (1).

## Beschreibung

Die Erfindung betrifft ein Verfahren zum Bearbeiten von sprödharten Werkstoffen, insbesondere von Gläsern oder Glaskeramiken, und eine Vorrichtung zur Durchführung des Verfahrens.

Das Trennen von sprödharten Werkstoffen wird derzeit durch thermisches Spannungsrisstrennen erreicht, das bei Gläsern oft mittels CO₂-Laser oder Brenner durchgeführt wird.

Aufgrund der hohen Absorptionsrate von sprödharten Werkstoffen, insbesondere von Gläsern oder Glaskeramik, gegenüber elektromagnetischer Strahlung im Wellenlängenbereich von 9,5 bis 10,6 µm erfolgt der Wärmeeintrag dabei immer zunächst über eine µm-dicke Schicht der Oberfläche des Werkstoffs. Durch Wärmeleitung unter Ausbildung quasi halbkugelförmiger Isothermen wird die Energie daraufhin durch Wärmeleitung in das Volumen hineintransferiert. Durch die lokale Erwärmung und damit erhöhte Dehnung des Werkstoffs im Einwirkbereich des Laserstrahls gegenüber dem umliegenden Werkstoffvolumen entsteht daraufhin im ersten Schritt eine partielle Druckspannung. Durch ein nachgeschaltetes Abkühlen, beispielsweise durch Beaufschlagung der Erwärmungszone mittels Aerosolen über eine Düse, werden die Temperatur- und damit Spannungsverhältnisse dann schlagartig umgekehrt, indem sich im Einwirkbereich des Laserstrahles durch die schnelle Abkühlung gegenüber dem dann bereits schon aufgewärmten Umgebungsbereich eine definierte Zugspannung - senkrecht zur Vorschubrichtung des Laserstrahls - ausbildet. In Verbindung mit einer initialen Verletzung der Werkstoffoberfläche führt diese Spannungsausbildung schließlich zu einem Anriss oder sogar einem vollständigen Schneiden des Werkstoffs.

Durch die Absorption an der Oberfläche und die mit einem Temperaturgefälle einhergehende halbschalenförmige Wärmeausbreitung in das Volumen sowie die Trägheit des Abkühlprozesses in die Materialtiefe nehmen die beabsichtigten Spannungen in quantitativer Ausprägung zum einen ab und auch eine definierte Orientierung über die Dicke der Werkstoffwandung ist erheblich erschwert. Bei Werkstoffen mit sehr hohen Wandstärken kann unter Umständen sogar ein vollständiges Schneiden des Werkstoffs nur durch aufwändige und damit kostenintensive Mehrfachprozessierung realisiert werden. Durch die Absorption an der Werkstoffoberfläche und die halbkugelförmige Wärmeausbreitung kann die Vorzugsrichtung des Risses von dort nur orthogonal orientiert eingebracht werden.

Es ist bekannt, dass durch die Zuhilfenahme von zusätzlichen Energiequellen, die auf das Volumen des Werkstoffkörpers einwirken, das erreichbare Werkstoffspannungsniveau beschleunigt werden kann. Dies jedoch auf dem Wege einer größeren Einwirkzone lateral und auch im Volumen des Werkstoffes, wobei zudem die Gefahr einer unkontrollierbaren bevorzugten Einkopplung der Mikrowelle durch Bildung von Überhitzungszonen im Lasererwärmungsbereich besteht und die Orientierung in die Tiefe des Materials nach wie vor in qualitativer Ausprägung identisch zum konventionellen Verfahren unverändert bleibt.

Diesbezüglich wird auf die US 2009/0320524 A1 verwiesen. Für den Anwendungszweck wird unter Umständen sogar so großflächig erwärmt, womit sich die Aufprägung lokal scharf begrenzter Temperaturgradienten und damit letztlich hoher Zugspannungen nach Abkühlung nicht erreichen lässt. Die US 2009/0320524 A1 zeigt generell das Schneiden von Glasplatten mit Hilfe eines Mikrowellen- und eines Laserstrahls, wobei ein Bruch durch die Platte hindurchgetrieben wird. Hierbei überlagert sich sowohl der Spalt des Mikrowellenstrahles wie auch des Laserstrahles, der auf der Glasplatte ausgebildet wird. Andere Anwendungen als das Schneiden einer Glasplatte sind in der US 2009/0320524 A1 nicht beschrieben. Während die Mikrowellenstrahlung mittels eines Gyrotron im Frequenzbereich 80-110 GHz erzeugt wir, fehlen Angaben zu Wellenlängen des Laserstrahles in der US 2009/0320524 A1 völlig. Als Laserquelle ist lediglich ein CO₂ - Laser mit einer Wellenlänge von 10,6 µm genannt.

Aus der US 2011/0049113 A1 ist ein Verfahren zum Trennen eines Glases (z.B. Borosilikatglas, Alumosilikatglas) mit geringer Wandstärke <0,7 mm mittels eines Lasers bekannt geworden. Um zu verhindern, dass eine unkontrollierte vollständige Trennung eines Flachglases mit der damit verbundenen schlechten Qualität der Kanten auftritt, wird das Verfahren so geführt, dass sich der durch die Lasereinwirkung erzeugte Spalt nicht durch die gesamte Glasdicke erstreckt. Dabei wird das Glassubstrat durch einen entlang einer Trennlinie geführten Laser oberflächlich stark erhitzt und nachgeschaltet durch einen mitgeführten Kühlstrahl abgekühlt.

Durch die erzeugte Materialspannung bildet sich entlang der Führungslinie des Lasers ein oberflächlicher Spalt im Glassubstrat. Unter mechanischer Krafteinwirkung wird das Substrat anschließend vollständig getrennt. Das Trennen von Glas wird nur für CO₂-Laser mit 10,6 µm und Leistungen von 38,92 und 100 W beschrieben.

Auch die US 2012/0047956 A1 beschreibt ein Verfahren zum Trennen von gehärtetem Glas mit Laser ohne mechanische Krafteinwirkung. Auch hier wird ein Laser zur oberflächlichen Erhitzung des Glassubstrates und ein nachfolgender Kühlstrahl zur schnellen Abkühlung entlang einer vorgegebenen Trennlinie über die Glasfläche geführt, wodurch Spannungen im Glas erzeugt werden. Ausgehend von einem zuvor an dem Glasrand oder in der Nähe des Glasrandes eingebrachten Startdefekt, der sich durch die gehärtete Oberflächenschicht hindurch bis in den Glaskörper hinein erstreckt, bildet sich in dem Glas ein durchgängiger Spalt/Bruch aus, der sich selbständig durch das Substrat ausbreitet, entlang dem Weg des geringsten Widerstands. Zum Trennen von gehärtetem Glas wird ein CO₂-Laser mit 182 W bei einer Wellenlänge von 10,6 µm eingesetzt.

Aus der US 5,622,540 B ist ein Verfahren zum Zerbrechen einer Glasscheibe bekannt geworden, bei dem ein Laser mit einer Wellenlänge im Infraroten zum Einsatz kommt. Auch hier ist der Einsatz von CO₂-Lasern offenbart.

Die US 2019/0300417 A1 zeigt ein Verfahren zum Bearbeiten von sprödharten Werkstoffen mittels eines Laserstrahls einer Laserquelle, wobei die Laserquelle im Wellenlängenbereich von 2 bis 5 µm elektromagnetische Strahlung emittiert, die wenigstens teilweise von dem sprödharten Werkstoff absorbiert wird. Der mittels Laserquelle bearbeitete sprödharte Werkstoff wird mit einer Bohrung oder Ausschnitten versehen oder getrennt. Eine andere Bearbeitung als Bohren oder Schneiden ist in der US 2019/0300417 A1 nicht erwärmt. Um thermischen Stress im Glas zu erzeugen, der zum Bruch bzw. zur Trennung führt, werden in der US 2019/0300417 A1 CO₂- und CO-Laser explizit genannt. Als Wellenlängenbereich der in der US 2019/0300417 A1 genannten Laser wird ein Bereich von 1,2 µm bis 13 µm, bevorzugt 4 bis 12 µm angegeben.

Aus der DE 10 2016 109 144 A1 ist ein fotosensitives Glas sowie ein Verfahren zu seiner Herstellung bekannt geworden, wobei das fotosensitive Glas durch einen Ziehprozess hergestellt wird.

Während das Trennen von Gläsern mittels Infrarot-Laser aus einer Vielzahl von Dokumenten bekannt geworden ist, ist weder die Formgebung noch das Tempern noch das Einbringen von Bohrungen oder Ausschnitten im Glas mit Hilfe von IR-Laserstrahlung in sprödharte Werkstoffe im Stand der Technik beschrieben.

Die Formgebung von sprödharten Werkstoffen, insbesondere von Gläsern oder Glaskeramiken, mittels Infrarot-Strahlung zeigt die US 7,000,430 B. Hierbei werden aber nicht Laserquellen eingesetzt, die IR-Strahlungen emittieren, sondern als IR-Strahlungsquelle IR-Strahler mit Reflektoren, die in einem Quarzal-Ofen angeordnet sind.

Durch die Verteilung der IR-Strahler im Quarzal-Ofen kann eine flächige Bestrahlung eines Glas- oder Glaskeramikmaterials, insbesondere in Plattenform, erreicht werden.

Aufgabe der Erfindung ist es, die zuvor genannten Nachteile zu beseitigen und ein verbessertes Verfahren zum Bearbeiten von sprödharten Werkstoffen, insbesondere von Gläsern oder Glaskeramiken, zur Verfügung zu stellen. Des Weiteren soll eine Vorrichtung zur Durchführung des Verfahrens angegeben werden.

Gelöst wird die Aufgabe durch ein Verfahren zum Bearbeiten von sprödharten Werkstoffen mittels eines Laserstrahls einer Laserquelle gemäß Anspruch 1 und/oder 10 und durch eine Vorrichtung gemäß Anspruch 8 und/oder 14.

Das erfindungsgemäße Verfahren und die erfindungsgemäße Vorrichtung zeichnen sich dadurch aus, dass die Laserquelle elektromagnetische Strahlung im Wellenlängenbereich von 2 bis 5 µm, d.h. IR-Strahlung, emittiert. Die Laserquelle ist ein sogenannter MIR-Laser (Mittelinfrarot-Laser).

Das Idealszenario eines Trennverfahrens zur Erzeugung einer geraden und definiert orientierten Trennkante beschreibt eine über die Materialstärke gleichmäßige und örtlich beschränkte Erwärmung, die es zusätzlich dann sogar bei Werkstoffwandungen größerer Abmessungen erlaubt, durch zusätzliche Aufprägung eines Thermoschocks auf der Rückseite - unter identischen thermischen Bedingungen wie auf der Vorderseite - ein vollständiges Schneiden des Werkstoffs in einem Durchlauf zu realisieren. Daraus ergibt sich die Forderung nach einer Energiequelle, die simultan und unter Beibehaltung eines identischen Erwärmungsquerschnittes über die gesamt Wandungsdicke sehr schnell den Werkstoff erwärmen kann.

Eine Trennung eines sprödharten Werkstoff kann durch eine Laserquelle erreicht werden, die IR-Strahlung im Wellenlängenbereich 2 bis 5 µm emittiert. Besonders bevorzugt ist es, wenn die Wellenlänge im Bereich 2 bis maximal 4,7 µm, insbesondere im Bereich 2 bis 4,5 µm, bevorzugt 2,8 bis 4 µm liegt. Derartige Energiequellen eignen sich auch zu völlig anderen Bearbeitungen von sprödhartem Werkstoff, wie dem Einbringen von Bohrungen sowie der Formgebung oder dem Tempern und Umformen. Mit Hilfe der sehr gut fokussierbaren MIR Laserquelle kann die erhöhte Absorption von Werkstoffen, insbesondere von Gläsern, z.B. von Borosilikatgläsern und Kalk-Natron-Gläsern, im Wellenlängenbereich von 2 bis 5 µm, insbesondere 2 bis maximal 4,7 µm vorteilhaft genutzt werden.

Diese Absorption liegt in Abhängigkeit vom Glastyp im Bereich von 20 bis 50%, wodurch eine Penetration der Laserstrahlung über mehrere mm bei simultaner Erwärmung über den eingestellten Fokusquerschnitt erfolgt. Wird nun eine Fokussierlinse mit einer Rayleigh-Länge etwas oberhalb der zu bearbeitenden Materialstärke oder ein kollimierter Strahl mit niedrigem Strahldurchmesser zur Anwendung gebracht, z.B. unter Einsatz eines Strahlteleskops, so können sehr gleichmäßige Erwärmungsprofile mit kleinen geometrischen Ausdehnungen bis in den höheren µm-Bereich im Glasvolumen realisiert werden. Die erhöhte Absorption der Werkstoffe im Wellenlängenbereich von 2 bis 5 µm, insbesondere 2 bis maximal 4,7 µm ist auf im Werkstoff vorhandene OH-Gruppen zurückzuführen.

Ein besonderer Vorteil des hier dargestellten Verfahrens und damit neuartigen Leistungsmerkmales stellt dabei die Möglichkeit dar, anders als bei CO₂₋Lasern, bei denen Spannungsfelder nur orthogonal zur Oberfläche des Werkstoffs erzeugt werden können, Laserstrahlung unter beliebigen Winkel zur Oberfläche durch den Werkstoff zu führen und damit die Erstellung von schrägen Trennkanten ohne jegliche kostenintensive Nachbearbeitung darzustellen. Bei dicken Werkstoffwandungen ist sogar vorstellbar, durch Einkopplung mehrerer verschieden orientierter Strahlen und entsprechend beidseitig eingebrachter Initialdefekte mehrere Rissfronten bei sehr kleinem Erwärmungsquerschnitt zu führen, um konturierte Kantengeometrien darzustellen.

Besonders bevorzugt ist es, Laserquellen zu verwenden, die Licht im Wellenlängenbereich von 2,8 bis 5 µm, insbesondere 2,8 bis maximal 4,7 µm, besonders bevorzugt 2,8 bis 4,5 µm, insbesondere bevorzugt 2,8 bis 4 µm, emitieren. Hier sind verschiedene Bautypen von Lasern möglich, etwa Erbiumdotierte Festkörperlaser, Halbleiterlaser, Festkörperlaser oder Glaslaser, deren Strahlung in einem entsprechend optisch aktiven Wandlerkristall hin zu größeren oder niedrigeren Wellenlängen gewandelt werden.

Die emitierte Wellenlänge eines Erbium-dotierten Festkörperlasers liegt bei 2,9 µm. Für die Erfinder überraschend hat sich herausgestellt, dass Laser im Wellenlängenbereich von 2 µm bis 4,7 µm, insbesondere 2 µm bis 4 µm, bevorzugt 2 µm bis 3 µm, besonders bevorzugt 2,5 bis 2,8 µm, hervorragende Ergebnisse beim Bearbeiten des sprödharten Werkstoffes, insbesondere beim Einbringen von Bohrungen/ Ausschnitten, Trennen, Tempern, sowie Umformen erziehlt werden. Ganz besonders gute Ergebnisse werden für das Tempern und Umformen erreicht. So kann durch den Einsatz von Lasern im angegebenen Wellenlängenbereich bei der Formgebung, insbesondere beim Umformen der Einsatz von IR-Strahlen in Form von konventionellen Lichtquellen mit Reflektoren wie in der US 7,000,430 B beschrieben, vermieden werden.

Bei einer besonders bevorzugten Ausführungsform der Erfindung ist vorgesehen, dass die von der Laserquelle abgegebene Laserstrahlung durch Strahlformungskomponenten geführt und der Laserstrahl durch die Komponenten entsprechend geformt wird. So ist es mit dem Einsatz von Linsen, beispielsweise Sammellinsen, möglich, den Strahl sehr stark zu fokussieren. Dieser Strahl kann entlang beispielsweise einer Trennfuge lokal begrenzt den sprödharten Werkstoff, insbesondere das Glas- oder die Glaskeramik, aufgrund von Absorption sehr stark erwärmen, so dass aufgrund lokaler Temperaturunterschiede der sprödharte Werkstoff entlang der Trennfuge getrennt werden kann. Alternativ zu einer sammelnden Optik kann auch eine strahlaufweitende Optik eingesetzt werden. So ist es möglich, einen sprödharten Werkstoff großflächig zu erwärmen, was ein Formen beispielsweise einer Glasplatte ermöglicht oder auch das Tempern von Glas oder Glaskeramikmaterial.

Um das Tempern von sprödharten Werkstoffen zu unterstützen, kann vorgesehen sein, zusätzlich eine Energiequelle, die beispielsweise Mikrowellenstrahlung bevorzugt im Wellenlängenbereich von 2 bis 5 GHz, bevorzugt bei 2,45 GHz emittiert, einzusetzen. Bei dem Glas kann es sich auch um ein kristallisationsempfindliches Glas, insbesondere ein Grünglas einer Glaskeramik, handeln.

Zur Erzeugung einer geraden und definiert orientierten Trennkannte kann vorteilhafterweise eine über die Materialstärke gleichmäßige und örtlich beschränkte Erwärmung zur Verfügung gestellt werden. Bei Glaswandungen größerer Abmessungen kann durch zusätzliche Aufprägung eines Thermoschocks auf der Rückseite des zu behandelnden Gegenstandes, bspw. einer Glasplatte, unter identischen thermischen Bedingungen wie auf der Vorderseite ein vollständiger Schnitt in einem Durchlauf realisiert werden. Mit Hilfe des Einsatzes der erfindungsgemäßen Laserquelle, die im Wellenlängenbereich 2 bis 5 µm, insbesondere 2 µm bis unter 4,8 µm.

Laserlicht emittiert, kann somit simultan und unter Beibehaltung eines identischen Erwärmungsquerschnittes über die gesamte Wandungsdicke des sprödharten Materials das sprödharte Material erwärmt werden. Aufgrund der sehr gut fokussierbaren Laserquellen kann eine Penetration der Laserstrahlung über mehrere mm in das sprödharte Material bei simultaner Erwärmung über den gesamten Fokusquerschnitt erfolgen. Wird eine Fokussierlinse oder ein kollimierter Strahl mit niedrigem Strahldurchmesser zur Anwendung gebracht, so können mit der Erfindung sehr gleichmäßige Erwärmungsprofile mit kleinen geometrischen Ausdehnungen bis in den höheren µm-Bereich im Glasvolumen realisiert werden. Ein besonderer Vorteil des erfindungsgemäßen Verfahrens und damit neuartigen Leistungsmerkmales stellt dabei die Möglichkeit dar, anders als bei CO₂-Laser, bei denen Spannungsfelder nur orthogonal zur Oberfläche des Glases erzeugt werden können, Laserstrahlung unter beliebigen Winkel zur Oberfläche durch das Glas zu führen und damit die Erstellung von schrägen Trennkanten ohne jegliche kostenintensive Nachbearbeitung darzustellen. Bei dicken Glaswandungen ist vorstellbar, durch Einkopplung mehrerer verschieden orientierter Strahlen und entsprechend beidseitig eingebrachter Initialdefekte mehrere Rissfronten bei sehr kleinem Erwärmungsquerschnitt, d.h. Laserfokusabmessung, zu führen, um konturierte Kantengeometrien darzustellen.

Mit Hilfe des Einsatzes von Laserquellen im Wellenlängenbereich von 2 bis 5 µm, besonders 2 µm bis unter 4,8 µm können durch die Volumenabsorption vieler Gläser lokal sehr begrenzte und in der geometrischen Ausgestaltung variable Temperaturgradienten und damit Spannungen in Gläsern dargestellt werden. Dies überwindet die Nachteile der Absprengprozesse mit Lasern im Bereich 9,5 bis 10,6 µm und erlaubt in Kombination mit dem Einsatz sehr kostengünstiger Mikrowellentechnologie im 2,45 GHz-Bereich zudem die Realisierung effizienter Schneidprozesse durch gezielte lokale Vorgabe von Einkopplungszonen der niederfrequenten Mikrowellenstrahlung durch Erwärmung des Glases durch den erfindungsgemäßen Laser in den Bereich der Glasschmelztemperatur, wo der dielektrische Verlustfaktor schlagartig erhöht wird und eine direkte Erwärmung durch die Mikrowelle erfolgt. Mit der Laserquelle wird eine definierte Einkopplungszone geschaffen, die der vollständigen beabsichtigten Trennfuge entspricht und dabei lokale Hot Spots übermäßiger Mikrowellenkopplung und damit einen unkontrollierten Prozess vermeidet. Durch die thermische Einflusszone über die gesamte Trennfuge erfolgt bei Warm-Weich-Trennen zudem eine Feuerpolitur der Kante simulant, die eine deutliche Steigerung der Bestrahlung direkt nach Vorbeilauf der Rissfront zusätzlich bewirkt.

Neben dem Trennen ist auch das Einbringen von Bohrungen/Ausschnitten in Glassubstraten mit dem erfindungsgemäßen Verfahren möglich. Da der Laserstrahl schräg durch die Wandung geführt werden kann, ergeben sich vor allem bei Ausschnitten dabei Vorteile, da durch eine geneigte Bruchfront der herauszulösende Restkörper nicht mehr bei leichter Kippung desselben verklemmen, wie bei senkrechter Trennfuge. Zudem können ganz allgemein abgewinkelte Schnittfugen erzeugt werden, was bei Außenkonturen der Glassubstrate erwünscht sein kann.

Das Trennen von sprödbrüchigem Material, wie Glas oder Glaskeramik, über Ausbildung lokaler Temperaturgradienten/Thermoschock ist vor allem bei Gläsern oder Glaskeramiken mit Dicken mehrerer Millimeter mit den erfindungsgemäßen Lasern interessant, bei dem die thermische Eindringtiefe von CO₂-Lasern bei 10,6 µm nicht mehr ausreichend ist. Dabei kann über Festoptiken oder scannende Systeme der Rohstrahl der Laserquelle so geformt und geführt werden, dass er simultan oder sukzessive die Trennfuge über die gesamte Tiefe des Substrates bestrahlt. Ausgehend von einem Initialdefekt, z.B. durch ein Panetrad oder Diamanten, kann dann unter Zuhilfenahme bspw. von Kühlaerosol die Trennung bei voranschreitender Erwärmungsfront erfolgen. Die Rissführung kann dabei auch im Volumen noch sehr exakt erfolgen, da Temperaturgradienten nicht durch diffuse Wärmeleitung und zwangsweise radialen Verläufe, sondern aufgrund der Volumenabsorption der Gläser durch direkte definierte Lasereinstrahlung exakt entsprechend gewünschter Muster geführt werden.

Bei einer Kombination der Erwärmung mittels einer Laserquelle, die im Wellenlängenbereich 2 bis 5 µm abstrahlt, mit einer zusätzlichen Energiequelle erzeugt die Laserquelle eine scharf abgegrenzte Erwärmungszone in einer Größenordnung von weniger als 10 µm, wobei Temperaturen im Bereich der Glasschmelztemperatur dargestellt werden. Bevorzugt kommt dabei ein Laserstrahl zum Einsatz mit dem schmalen Schnittfugen erreicht werden. Durch eine anschließende Bestrahlung mit Mikrowelle (cw oder gepulst) wird sodann eine große zusätzliche Energiemenge zugeführt, die zum schlagartigen Verdampfen des Glases führt.

Neben dem Trennen von Glas oder Glaskeramik, wie zuvor ausführlich beschrieben, ist mit dem erfindungsgemäßen Verfahren auch ein Tempern von Glas oder Glaskeramik oder auch eine Formgebung möglich.

Mit konventionellen Verfahren, wie im Stand der Technik in Form der US 7,000,430 B, kann defokussiert im Volumen oder fokussiert mit hohen Leistungsdichten an der Oberfläche Energie deponiert werden. Für viele Formgebungsverfahren ist jedoch eine definierte Darstellung hoher Leistungsdichten, entweder homogen über das Volumen oder mit variablen Gradienten in selbigem, erforderlich. Dies vermag keine der konventionellen Technologien.

Mit der erfindungsgemäßen Laserquelle ist es aufgrund partieller Absorption über den im Material fortschreitenden Laserstrahl unter Zuhilfenahme geeigneter Strahlformungskomponenten bei geführtem Laserstrahl möglich, Erwärmungszonen im Volumen von sprödbrüchigem Material, bspw. von Glassubstraten, darzustellen, die Freiheitsgrade in Hinsicht auf die Ausgestaltung von Temperaturprofilen eröffnet, die weit z.B. über die halbkugelförmig von der Oberfläche ausgehenden Erwärmungszonen bei CO₂-Lasern oder vergleichsweise großflächigen Erwärmungszonen bei Einsatz diffuser KIR-Strahler hinausreichen. Da in vielen Ausgabenstellungen zur Formung von Glas, z.B. in Halbzeugform Rohr oder Scheibe, eine lokale, annähernd homogene Erwärmungszone erwünscht ist und dabei Wandstärken zunehmend im Bereich <1 mm liegen, bietet der Einsatz von Laserquellen gemäß der Erfindung erhebliche Vorteile.

So kann die Breite der Erwärmung durch den Laserstrahl direkt bis auf den µm-Bereich reduziert werden und, da sich dabei das Glas über das gesamte Volumen simultan erwärmt, kann die Erwärmungsphase von der eigentlichen Formung kurz gehalten werden. Das reduziert zum einen die Zykluszeit und führt damit zu potentiell wirtschaftlicheren Formprozessen, zum anderen werden dadurch thermische Einflusszonen aufgrund der Wärmeleitung im Glas erheblich reduziert. Die damit örtlich abgegrenzten Zonen mit Glastemperaturen im Bereich des Erweichungspunktes von Glas erlauben etwa Formgebung mit erheblich reduzierten Formungsradien. Dies trifft etwa die Anforderungen, wie sie vor allem bei Anwendungen im Bereich elektronischer Konsumgüter, wo Gläser für optische Funktionalitäten, wie Touch & Cover-Applikationen z.B. für Designfeatures, von geformten erhabenen Oberflächen gefordert sind.

Die Erwärmungszone vermag geometrisch mit Hilfe von erfindungsgemäßen Laserquellen, aber auch noch auf andere Weise erzeugt werden, wie dies mit konventionellen Quellen nicht möglich ist. So können schräge Erwärmungszonen über die Dicke des Werkstückes erzeugt oder über Fokusführung mit z.B. scannenden Systemen bei starker Fokussierung Temperaturpeaks im Mittenbereich der Glaswandung dargestellt werden, die vergleichsweise kalte Oberflächen ermöglichen und damit bei Zuhilfenahme von Formwerkzeugen erlauben, ohne die normalerweise bei Oberflächenkontakt derselben auftretenden Defekte, wie Schlieren und Risse, zu erzeugen. Damit werden im Vergleich zur Formgebung mit konventionellen Erwärmungsquellen erheblich robustere Prozesse und größere Formungsgeometrien möglich, die bisher nicht oder nur mit hohem zusätzlichen Aufwand zu realisieren waren.

Von besonderem Vorteil sind die Laserquellen gemäß der Erfindung beim Einsatz in der Formgebung, wenn es sich um kristallisationsempfindliche Gläser oder Grünglaser von Glaskeramiken handelt. Da durch die simulante Erwärmung des Glases über das gesamte Volumen die Notwendigkeit einer Haltezeit zur Tiefendurchwärmung über Wärmeleitung z.B. im Vergleich zu fossilen Brennern oder CO₂-Lasern, nahezu entfällt, können eine ungewünschte Keimbildung und ein ungewünschtes Keimwachstum, die zu Rissen oder Bruch führen, aufgrund zu langer Erwärmungsphasen der zuerst erwärmten Zonen vermieden werden. Zugleich sind hohe Leistungsdichten deponierbar, was z.B. bei diffuser KIR-Strahlung nicht möglich ist bzw. nur durch unverhältnismäßig teure und leistungsstarke Quellen, sofern technologisch darstellbar.

Besonderes Potential bieten die erfindungsgemäßen Laserquellen bei einer spezifischen Form der Formgebung von Glas und Glaskeramik, bei der Formung von Glaskörpern über Ziehprozesse. Bei diesen werden aufgrund unvermeidlicher Temperaturgradienten der in der Regel zumindest z.T. durch Konvektion übertragenen Wärme ungewünschte partielle Formfehler aufgeprägt, z.B. wellenförmige (Rand-)Strukturen. Durch eine Ausgestaltung des Ziehaggregates mit erfindungsgemäßen Laserquellen bei gleichzeitiger Möglichkeit der Laserleitungsmodulation ist es möglich, diese Temperaturhomogenitäten im Glas zu kompensieren und dies homogen über das gesamte Volumen und nicht nur, wie etwa über einen CO₂-Laser bei 10,6 µm, durch lokale Zuwärmung über die Glasoberfläche zu erwärmen.

So wie beim Trennen von Glas in der Ausführungsvariante eines Hybridprozesses unter Einbindung von Mikrowellenstrahlung Vorteile erzielt werden, eröffnet auch beim Formen die erfindungsgemäße Verwendung von Laserstrahlen die Möglichkeit einer erheblichen Effizienzerhöhung des Druchwärmungsprozesses durch Einkopplung kostengünstiger Mikrowellenstrahlung, bspw. 2,45 GHz-Strahlung (Haushaltsmikrowelle).

Neben dem Verfahren stellt die Erfindung auch eine Vorrichtung zur Durchführung des Verfahrens zu Verfügung. Die Vorrichtung zeichnet sich dadurch aus, dass sie eine Laserquelle, die Laserstrahlung im Wellenlängenbereich 2 bis 5 mm emittiert, umfasst. Besonders bevorzugt ist es, wenn die Vorrichtung noch eine zusätzliche Energiequelle, bspw. eine Energiequelle, die Mikrowellenstrahlung emittiert, aufweist.

Nachfolgend soll die Erfindung anhand der Zeichnung, ohne Beschränkung hierauf, näher beschrieben werden.

Es zeigt:

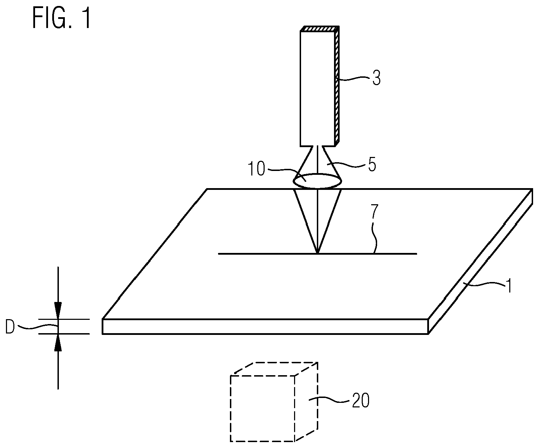

- Fig.1: eine erfindungsgemäße Vorrichtung.

In Fig. 1 ist eine erfindungsgemäße Anordnung gezeigt, wie sie bei der Erwärmung eines sprödharten Werkstoffes, hier einer Glasplatte 1 mit einer Dicke D, zur Trennung bzw. Formgebung eingesetzt wird. Die Dicke D der Glasplatte 1 ist variabel und liegt im Bereich von 4 mm bis 50 µm. Dünnstgläser haben eine Dicke <200 µm und können mit dem erfindungsgemäßen Verfahren, bei dem eine Laserquelle 3, die Strahlung 5 im Wellenlängenbereich 2 µm bis 5 µm, besonders 2 µm bis unter 4,8 µm, insbesondere 2 µm bis 4,5 µm, bevorzugt 2 µm bis 4 µm, emittiert, entlang der Trennlinie 7 der Glasscheibe 1 getrennt werden. Bei der Laserquelle 3 kann es sich bspw. um einen Festkörperlaser, insbesondere einen erbiumdotierten Festkörperlaser oder einen Halbleiterlaser oder einen Gaslaser mit nicht dargestelltem Wandlerkristall, zur Einstellung der gewünschten Wellenlänge handeln.

Da das Glasmaterial der Platte 1 die ausgesandte Strahlung im Bereich 2 µm bis 5 µm stark absorbiert, kann mittels des erfindungsgemäßen Lasers eine hohe Temperatur entlang der Trennlinie 7 eingebracht werden. Ausgehend von einem Initialdefekt ist es dann möglich, bspw. mit Hilfe von Kühlaerosolen, dass ein Riss ausgebildet wird, entlang dem die Trennung erfolgt. Um das Licht der Laserquelle zu fokussieren, ist vorliegend vorgesehen, dass als Strahlformungsoptik eine Linse 10 eingesetzt wird, mit der das Licht sehr stark entlang der Trennlinie 7 gebündelt werden und damit eine sehr lokale Erwärmung induziert werden kann.

Alternativ könnte anstelle der Sammellinse 10 auch eine Zerstreuungslinse (nicht gezeigt) als formbildende Komponente eingesetzt werden. In einem solchen Fall wird der von der Laserquelle 3 ausgehende Lichtstrahl aufgeweitet und es kann eine größere Zone der Glasplatte erwärmt werden, insbesondere durch Absorption der Laserstrahlung. Die großflächige Erwärmung kann dann wieder dazu genutzt werden, die Glasplatte zu formen, bspw. zu biegen. Auf Grund der hohen Eindringtiefe der Laserstrahlen mit einer Wellenlänge von 2 µm bis 5 µm, insbesondere 2 µm bis 4,8 µm, bevorzugt 2 µm bis 4,5 µm, besonders bevorzugt 2 µm bis 4 µm, gegenüber_der Laserstrahlung mit 10,6 µm ist es möglich, auch dickere Substrate zu formen bzw. zu biegen, da eine Durchwärmung in die Tiefe erfolgt.

Nicht notwendig, aber optional, kann auf der der Laserquelle 3 gegenüberliegenden Seite der Glasplatte 1 eine Mikrowelleneinrichtung 20 vorgesehen sein, mit der Mikrowellenstrahlung auf die Glasplatte 1 einwirkt. Mit Hilfe der Mikrowellenstrahlung ist es möglich, bspw. sowohl einen Trennprozess wie auch einen Erwärmungsprozess, z.B. für die Formgebung, zusätzlich zu unterstützen. Durch den Einsatz der Mikrowellenquelle 20 kann eine erhebliche Effizienzerhöhung des Druchwärmungsprozesses erreicht werden. Ganz besonders bevorzugt ist es, wenn aus der Mikrowellenquelle 20 Mikrowellenstrahlung mit 2,45 GHz entsprechend einer Haushaltsmikrowelle abgestrahlt wird.

Mit der Erfindung wird erstmals für eine Vielzahl von möglichen Bearbeitungen von sprödbrüchigen Material, bspw. Glas oder Glaskeramik, angegeben, mit dem effiziente Trennung des Glasmaterials, effiziente Temperung sowie Formgebung möglich sind.

Die Erfindung umfasst Aspekte, die Gegenstand der nachfolgenden Sätze sind, die Teil der Beschreibung sind, aber keine Ansprüche in Übereinstimmung mit J 15/88 der Beschwerdekammern.

### Sätze

1. Verfahren zum Bearbeiten von sprödharten Werkstoffen (1) mittels eines Laserstrahls einer Laserquelle (3),
   dadurch gekennzeichnet, dass
   die Laserquelle (3) im Wellenlängenbereich von 2 µm bis 5 µm elektromagnetische Strahlung emittiert, die wenigstens teilweise von dem sprödharten Werkstoff absorbiert wird und der sprödharte Werkstoff einem der nachfolgenden Prozesse unterworfen wird:
   - Einbringen von Bohrung/Ausschnitten in den sprödharten Werkstoff
   - Trennen des sprödharten Werkstoffes
   - Tempern des sprödharten Werkstoffes
   - Umformen des sprödharten Werkstoffes.
2. Verfahren nach Satz 1,
   dadurch gekennzeichnet, dass
   der sprödharte Werkstoff ein Glas oder eine Glaskeramik ist.
3. Verfahren nach einem der Sätze 1 bis 2,
   dadurch gekennzeichnet, dass
   die von der Laserquelle (3) abgegebene Laserstrahlung durch Strahlformungskomponenten (10) geformt und/oder geführt wird.
4. Verfahren nach einem der Sätze 1 bis 3,
   dadurch gekennzeichnet, dass
   das Verfahren eine zusätzliche Energiequelle (20) zur Laserquelle (3) umfasst.
5. Verfahren nach Satz 4,
   dadurch gekennzeichnet, dass
   die zusätzliche Energiequelle eine Energiequelle (20) ist, die Mikrowellenstrahlung emittiert.
6. Verfahren nach einem der Sätze 1 bis 5,
   dadurch gekennzeichnet, dass
   der sprödharte Werkstoff ein kristallisationsempfindliches Glas, insbesondere ein Grünglas einer Glaskeramik, ist.
7. Verfahren nach einem der Sätze 1 bis 6,
   dadurch gekennzeichnet, dass
   die Laserquelle (3) einen Festkörperlaser, insbesondere einen Erbiumdotierten Festkörperlaser, einen Halbleiterlaser oder einen Glaslaser, insbesondere einen Glaslaser mit einem optisch aktiven Wandlerkristall, umfasst.
8. Verfahren nach einem der Sätze 1 bis 7,
   dadurch gekennzeichnet, dass
   das Glas oder Glaskeramikmaterial über einen Ziehprozess hergestellt wird.
9. Vorrichtung zum Bearbeiten von sprödharten Werkstoff, insbesondere zum
   - Einbringen von Bohrungen/Ausschnitten
   - Trennen
   - Tempern
   - Umformen
   mit einer Laserquelle (3) und Strahlformungskomponenten (10) zur Formung des von der Laserquelle (3) emittierten Lichtstrahles,
   dadurch gekennzeichnet, dass
   die Laserquelle (3) als Laserstrahlung elektromagnetische Strahlung im Wellenlängenbereich 2 µm bis 5 µm emittiert.
10. Vorrichtung nach Satz 9,
   dadurch gekennzeichnet, dass
   die Vorrichtung eine zusätzliche Energiequelle (20), insbesondere eine Mikrowellenquelle, umfasst.

## Patentansprüche

1. Verfahren zum Bearbeiten von Glas oder einer Glaskeramik mittels eines Laserstrahls einer Laserquelle (3),
**dadurch gekennzeichnet, dass**
die Laserquelle (3) im Wellenlängenbereich von 2 µm bis 5 µm elektromagnetische Strahlung emittiert, die wenigstens teilweise von dem sprödharten Werkstoff absorbiert wird und das Glas- oder die Glaskeramik einem der nachfolgenden Prozesse unterworfen wird:
- Tempern des Glases oder der Glaskeramik
- Umformen des Glases oder der Glaskeramik

2. Verfahren nach Anspruch 1,
**dadurch gekennzeichnet, dass**
das Glas ein kristallisationsempfindliches Glas, insbesondere ein Grünglas einer Glaskeramik, ist.

3. Verfahren nach einem der Ansprüche 1 bis 2,
**dadurch gekennzeichnet, dass**
die von der Laserquelle (3) abgegebene Laserstrahlung durch Strahlformungskomponenten (10), insbesondere eine zerstreuende Optik, bevorzugt einer Zerstreuungslinse geformt und/oder geführt wird.

4. Verfahren nach einem der Ansprüche 1 bis 3,
**dadurch gekennzeichnet, dass**
das Verfahren eine zusätzliche Energiequelle (20) zur Laserquelle (3) umfasst.

5. Verfahren nach Anspruch 4,
**dadurch gekennzeichnet, dass**
die zusätzliche Energiequelle eine Energiequelle (20) ist, die Mikrowellenstrahlung emittiert.

6. Verfahren nach einem der Ansprüche 1 bis 5,
**dadurch gekennzeichnet, dass**
die Laserquelle (3) einen Festkörperlaser, insbesondere einen Erbiumdotierten Festkörperlaser, einen Halbleiterlaser oder einen Glaslaser, insbesondere einen Glaslaser mit einem optisch aktiven Wandlerkristall, umfasst.

7. Verfahren nach einem der Ansprüchen 1 bis 6,
**dadurch gekennzeichnet, dass**
das Glas oder Glaskeramikmaterial über einen Ziehprozess hergestellt wird.

8. Vorrichtung zum Bearbeiten von Glas oder einer Glaskeramik zum
- Tempern
- Umformen
mit einer Laserquelle (3) und Strahlformungskomponenten (10) zur Formung des von der Laserquelle (3) emittierten Lichtstrahles,
**dadurch gekennzeichnet, dass**
die Laserquelle (3) als Laserstrahlung elektromagnetische Strahlung im Wellenlängenbereich 2 µm bis 5 µm emittiert.

9. Vorrichtung nach Anspruch 8,
**dadurch gekennzeichnet, dass**
die Vorrichtung eine zusätzliche Energiequelle (20), insbesondere eine Mikrowellenquelle, umfasst.

10. Verfahren zum Bearbeiten von sprödharten Werkstoffen (1), insbesondere ein Glas- oder eine Glaskeramik mittels eines Laserstrahls, einer Laserquelle (3),
**dadurch gekennzeichnet, dass**
die Laserquelle (3) im Wellenlängenbereich von 2 µm bis unter 4,5 µm, insbesondere 2 µm bis 4,5 µm, ganz besonders bevorzugt 2 µm bis 4 µm elektromagnetische Strahlung emittiert, die wenigstens teilweise von dem sprödharten Werkstoff absorbiert wird und der sprödharte Werkstoff einem der nachfolgenden Prozesse unterworfen wird:
- Einbringen von Bohrung/Ausschnitten in den sprödharten Werkstoff
- Trennen des sprödharten Werkstoffes

11. Verfahren nach Anspruch 10 ,
**dadurch gekennzeichnet, dass**
die von der Laserquelle (3) abgegebene Laserstrahlung durch Strahlformungskomponenten (10), insbesondere eine geformt und/oder geführt wird.

12. Verfahren nach einem der Ansprüche 10 bis 11,
**dadurch gekennzeichnet, dass**
das Verfahren eine zusätzliche Energiequelle (20), insbesondere eine Energiequelle, die Mikrowellenstrahlungen emitiert zur Laserquelle (3) umfasst.

13. Verfahren nach einem der Ansprüche 10 bis 12,
**dadurch gekennzeichnet, dass**
die Laserquelle (3) einen Festkörperlaser, insbesondere einen Erbiumdotierten Festkörperlaser, einen Halbleiterlaser oder einen Glaslaser, insbesondere einen Glaslaser mit einem optisch aktiven Wandlerkristall, umfasst.

14. Vorrichtung zum Bearbeiten von sprödharten Werkstoff, insbesondere zum
- Einbringen von Bohrungen/Ausschnitten
- Trennen
mit einer Laserquelle (3) und Strahlformungskomponenten (10) zur Formung des von der Laserquelle (3) emittierten Lichtstrahles,
**dadurch gekennzeichnet, dass**
die Laserquelle (3) als Laserstrahlung elektromagnetische Strahlung im Wellenlängenbereich 2 µm bis unter 4,8 µm, insbesondere 2 µm bis 4,5 µm, ganz bevorzugt 2 µm bis 4 µm emittiert.

15. Vorrichtung nach Anspruch 14,
**dadurch gekennzeichnet, dass**
die Vorrichtung eine zusätzliche Energiequelle (20), insbesondere eine Mikrowellenquelle, umfasst.
